# EUROPÄISCHE PATENTSCHRIFT

(11) **EP 2 597 257 B1**
(45) Veröffentlichungstag und Bekanntmachung des Hinweises auf die Patenterteilung: **13.07.2016**
(21) Anmeldenummer: 11190851.3
(22) Anmeldetag: 25.11.2011
(51) Int. Cl.: F04D 29/54, F01D 5/14, F04D 29/68

(54) **Beschaufelung**
Blades
Aubage

(43) Veröffentlichungstag der Anmeldung: 29.05.2013
(73) Patentinhaber: MTU Aero Engines AG, 80995 München (DE)
(72) Erfinder: Wunderer, Roland, 85716 Unterschleißheim (DE); Passrucker, Harald, 81247 München (DE)

(56) Entgegenhaltungen:
- EP-A1- 2 261 462
- EP-A1- 2 458 148
- EP-A2- 0 997 612
- EP-A2- 2 589 752
- WO-A2-2011/039352
- US-A1- 2007 258 818
- US-A1- 2011 044 818
- US-A1- 2011 189 023
- ATKINS M J: "SECONDARY LOSSES AND END-WALL PROFILING IN A TURBINE CASCADE", IMECHE CONFERENCE ON TURBOMACHINERY: EFFICIENCY PREDICTION ANDIMPROVEMENT, XX, XX, Bd. 6, 1. Januar 1987 (1987-01-01), Seiten 29-42, XP001012087,

## Beschreibung

Die Erfindung betrifft eine Beschaufelung für eine Turbomaschine, nach dem Oberbegriff des Anspruchs 1 und ein Herstellungsverfahren für eine solche Beschaufelung.

Eine Schaufelpassage einer Turbomaschine wird allgemein durch eine naben- und eine gehäuseseitige Seitenwand sowie dazwischen angeordnete Leit- oder Laufschaufeln definiert, wobei die Seitenwände jeweils naben- oder gehäusefest sein können. In den Schaufelpassagen können durch den Einfluss der Wandreibung verstärkte Umlenkungen der Strömung im Bereich der Seitenwände auftreten, wodurch sich teilweise stark ausgeprägte Sekundärströmungen ergeben. Diese Sekundärströmungen verursachen erhöhte Verluste.

Aus der EP 1 995410 A1 ist eine Beschaufelung für eine Turbine bekannt, bei der auf einer eine Anzahl an Schaufeln aufweisenden Seitenwand Aufdickungen und Vertiefungen ausgebildet sind. Aus der EP 2 248 966 A1 und der DE 32 02 855 C1 sind Beschaufelungen für Turbinen bzw. Strömungsmaschinen bekannt, bei denen auf einer eine Anzahl an Schaufeln aufweisenden Seitenwand Erhöhungen ausgebildet sind.

US 2007/258818 A1 offenbart eine Beschaufelung mit einer Vielzahl von Schaufeln, die auf einer Seitenwand angeordnet sind. Dabei ist auf einer Schaufeldruckseite eine erste Aufdickung und auf einer Schaufelsaugseite eine Vertiefung vorgesehen. Eine zweite Aufdickung erstreckt sich von der ersten Aufdickung parallel zu der Schaufeldruckseite und der Schaufelsaugseite bzw. verläuft zwischen der Schaufeldruckseite und der Schaufelsaugseite. Die zweite Aufdickung ist jedoch nicht mit der Schaufelsaugseite verbunden.

EP 0 997 612 A2 offenbart eine Beschaufelung, in er ein Teil der Seitenwand einen gewölbten Verlauf aufweist. Dabei verläuft der Seitenwandverlauf in der der Austrittseite benachbarten Hälfte eben.

Die Aufgabe der vorliegenden Erfindung ist es, eine verbesserte Beschaufelung und ein Verfahren zu deren Herstellung zur Verfügung zu stellen.

Diese Aufgabe wird durch eine Beschaufelung mit den Merkmalen des Anspruches 1 sowie durch ein Herstellungsverfahren für eine Beschaufelung mit den Merkmalen des Anspruches 7 gelöst. Vorteilhafte Weiterbildungen sind Gegenstand der Unteransprüche.

Nach einem Aspekt der vorliegenden Erfindung sind bei einer Beschaufelung für eine Turbomaschine, bei der auf einer eine Anzahl an Schaufeln aufweisenden Seitenwand Aufdickungen und Vertiefungen ausgebildet sind, für die Anzahl an Schaufeln jeweils mindestens eine Vertiefung auf einer Schaufeldruckseite und mindestens eine Aufdickung auf einer Schaufelsaugseite angeordnet.

Durch dieses gezielte kombinierte Anbringen von Aufdickungen und Vertiefungen an Druck- bzw. Saugseite kann eine vorteilhafte lokale Anpassung des statischen Druckes und der Strömungsgeschwindigkeit erreicht werden, wodurch die Sekundärströmungen vorteilhaft beeinflusst und die Strömungsverluste verringert werden können. Neben der Verlustverringerung in den Schaufelkanälen über einen großen Betriebsbereich der Turbomaschinen kann ein weiterer Vorteil dieser Ausgestaltung auch in einer Vergrößerung des Betriebsbereichs der Turbomaschinen liegen. Ein Vorteil kann auch in einer einfachen konstruktiven Umsetzung und/oder der Anwendbarkeit für bereits bestehende Auslegungen von Turbomaschinen liegen.

Als Beschaufelung im Sinne der vorliegenden Erfindung wird insbesondere eine Anordnung von Laufschaufeln und/oder eine Anordnung von Leitschaufeln, insbesondere einer oder mehrerer Stufen, bezeichnet. Eine erfindungsgemäße Beschaufelung ist besonders für Hochdruckverdichter geeignet. In einer bevorzugten Ausführung weist ein Flugtriebwerk eine erfindungsgemäße Beschaufelung auf.

Eine Seitenwand im Sinne der vorliegenden Erfindung kann naben- bzw. rotor- und/oder gehäuseseitig sowie naben- bzw. rotor- und/oder gehäusefest sein. So kann eine Seitenwand die nabenseitige, d.h. radial innere, und nabenfeste Umfangsfläche eines Laufgitters, und/oder die gehäuseseitige, d.h. radial äußere Umfangsfläche eines Laufgitters, die insbesondere durch ein nabenfestes Deckband oder eine gehäusefeste Innenfläche gebildet sein kann, umfassen. Gleichermaßen kann eine Seitenwand die gehäuseseitige, radial äußere Umfangsfläche und/oder die nabenseitige Umfangsfläche eines Leitgitters umfassen, die insbesondere durch ein gehäusefestes Deckband oder eine nabenfeste Außenfläche gebildet sein kann.

Unter einer Vertiefung im Sinne der vorliegenden Erfindung wird insbesondere ein Bereich der Seitenwand verstanden, der in Bezug zu anderen Bereichen der Seitenwand radial nach innen versetzt ist, während unter einer Aufdickung bzw. Erhöhung im Sinne der vorliegenden Erfindung insbesondere ein Bereich der Seitenwand verstanden wird, der in Bezug zu anderen Bereichen der Seitenwand radial nach außen versetzt ist. Eine Vertiefung bzw. Aufdickung im Sinne der vorliegenden Erfindung kann insbesondere in Bezug zu einer, insbesondere geraden oder gekrümmten, Bezugskegelfläche radial nach innen bzw. außen zurück- bzw. überstehen, die konzentrisch zu einer Rotationsachse liegt. Die Bezugskegelfläche kann insbesondere durch die radial innersten oder radial äußersten Punkte der Seitenwand oder dazwischen verlaufen. Insbesondere kann der Radius der Bezugskegelfläche dem Mittelwert der maximalen und minimalen oder aller radialen Erstreckungen der Seitenwand entsprechen. Weiterhin kann sich die Vertiefung bzw. Aufdickung auch auf eine Bezugskegelfläche beziehen, die durch einen unkonturierten Bereich der Seitenwand oder einen Fuß oder eine Spitze der Schaufeln verläuft.

Unter einer Aufdickung im Sinne der vorliegenden Erfindung kann insbesondere eine im Vergleich zu der Vertiefung größere radiale Abmessung verstanden werden, unter einer Vertiefung entsprechend eine im Vergleich zu der Aufdickung kleinere radiale Abmessung.

Denkt man sich beispielsweise eine in Umfangsrichtung sinusförmig gewellte Seitenwand, so stellen die Berge bzw. Täler Aufdickungen bzw. Vertiefungen im Sinne der vorliegenden Erfindung gegenüber der Mittellinie dar. Gleichermaßen kann man von einer Bezugskegelfläche durch die radial maximalen oder minimalen Amplituden der sinusförmig gewellten Seitenwand ausgehen. Auch dann stellen die Täler (Berge) Vertiefungen (Aufdickungen) relativ zu dieser Bezugskegelfläche dar, die Berge (Täler) Aufdickungen (Vertiefungen), da sie demgegenüber radial weiter außen (innen) liegen.

Bevorzugt ist die Seitenwand in axialer Richtung vor und/oder nach den druckseitigen Vertiefungen und/oder saugseitigen Aufdickungen unkonturiert, d.h. weist über den gesamten Umfang eines Radialschnittes denselben Radius auf.

In einer bevorzugten Ausführung beginnt eine im Bereich der Schaufeldruckseite angeordnete Vertiefung und/oder eine im Bereich der Schaufelsaugseite angeordnete Aufdickung, in Strömungsrichtung betrachtet, vor oder nach der Schaufeleintrittskante.

Bevorzugt erstreckt sich eine im Bereich der Schaufeldruckseite angeordnete Vertiefung und/oder eine im Bereich der Schaufelsaugseite angeordnete Aufdickung in axialer Richtung über wenigstens 10%, vorzugsweise wenigstens 30% der axialen Gitterlänge, gemessen zwischen Schaufelein- und -austrittskante.

Gemäß der Erfindung ist bei der Beschaufelung die an der Schaufelsaugseite angeordnete Aufdickung und/oder die an der Schaufeldruckseite angeordnete Vertiefung in der der Eintrittsseite benachbarten bzw. zugewandten axialen Hälfte des Schaufelgitters angeordnet. Gemäß der Erfindung ist bei der Beschaufelung jeweils eine sich von der Schaufelsaugseite zu der Schaufeldruckseite erstreckende zweite Aufdickung in der der Austrittsseite benachbarten Hälfte angeordnet. Bei dieser Ausgestaltung kann die zweite Aufdickung umfangssymmetrisch angeordnet und ausgestaltet sein. Alternativ kann die zweite Aufdickung umfangsasymmetrisch angeordnet und ausgestaltet sein. Bevorzugt kann sich die zweite Aufdickung in Umfangsrichtung von einer bis zu der benachbarten Schaufel erstrecken. In axialer Richtung kann sich die zweite Aufdickung in einer bevorzugten Ausführung über wenigstens 10% der axialen Gitterlänge erstrecken. Die zweite Aufdickung kann radial höher oder niedriger sein als die auf einer Schaufelsaugseite angeordnete Aufdickung.

Vorzugsweise kann die vorliegende Erfindung bei Schaufelgittern angewandt werden, die einen geknickten, insbesondere wenigstens im wesentlichen orthogonalen Übergang von den Schaufeldruck- und/oder -saugseiten zu der Seitenwand aufweisen, gleichermaßen auch bei Schaufelgittern, die eine Füßausrundungsfläche im Übergangsbereich von den Schaufeldruck- und/oder - saugseiten zu der Seitenwand aufweisen.

Nach einem weiteren das Herstellungsverfahren betreffenden Aspekt der vorliegenden Erfindung wird bei einem Herstellungsverfahren für eine Beschaufelung für eine Turbomaschine mindestens ein Urformen, Umformen und/oder spanenden Bearbeiten derart ausgeführt, dass bei einer eine Anzahl an Schaufeln aufweisenden Seitenwand Aufdickungen und Vertiefungen ausgebildet werden, wobei für die Anzahl an Schaufeln jeweils mindestens eine Vertiefung auf einer Schaufeldruckseite und mindestens eine Aufdickung auf einer Schaufelsaugseite ausgebildet wird.

Durch die erfindungsgemäße Ausgestaltung kann vorteilhafterweise eine Beschaufelung mit hohem Wirkungsgrad, insbesondere in einer schnelllaufenden Hochdruckverdichter(stufe) zur Verfügung gestellt werden.

Weitere Merkmale und Vorteile ergeben sich aus den Unteransprüchen und den Ausführungsbeispielen. Hierzu zeigen, teilweise schematisiert:
- Fig. 1: eine perspektivische Darstellung einer erfindungsgemäßen Beschaufelung;
- Fig. 2: ein Höhenliniendiagramm der Konturierung einer Seitenwand für ein erstes Ausführungsbeispiel der vorliegenden Erfindung in einer Abwicklung;
- Fig. 3: ein Höhenliniendiagramm der Konturierung einer Seitenwand für ein zweites Ausführungsbeispiel der vorliegenden Erfindung in Fig. 2 entsprechender Darstellung;
- Fig. 4: eine Fig. 2 entsprechende Darstellung, in der Positionen der Schnitte der nachfolgenden Figuren eingezeichnet sind;
- Fig. 5: Schnitte längs der Linien A, B, C, D und E in Fig. 4 für eine erste Ausgestaltung der Beschaufelung;
- Fig. 6: Schnitte längs der Linien A, B, C, D und E in Fig. 4 für eine zweite Ausgestaltung der Beschaufelung;
- Fig. 7: Schnitte längs der Linien A, B, C, D und E in Fig. 4 für eine dritte Ausgestaltung der Beschaufelung und
- Fig. 8: Schnitte längs der Linien A, B, C, D und E in Fig. 4 für eine vierte Ausgestaltung der Beschaufelung.

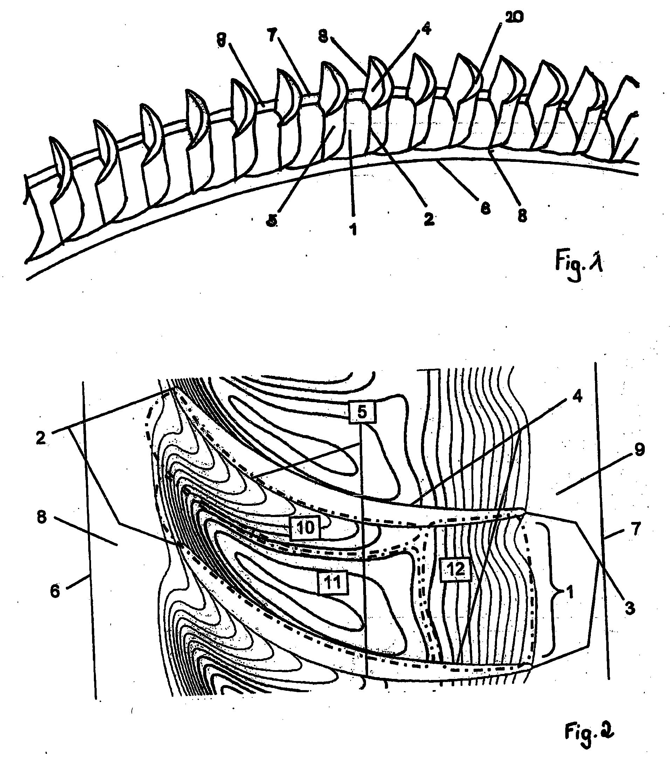

Fig. 1 zeigt eine perspektivische Darstellung einer Beschaufelung für eine Turbomaschine mit einer Konturierung der nabenseitigen Seitenwand 1 bei einem Verdichter-Statorgitter im Nabenbereich, wobei die Gehäusewand in der Fig. 1 nicht dargestellt ist. Auf einer Seitenwand 1 ist eine Anzahl an Schaufeln 20 mit einer Schaufelvorderkante 2, einer Schaufelhinterkante 3, einer Schaufeldruckseite 4 und einer Schaufelsaugseite 5 angeordnet, wobei die Seitenwand 1 vorzugsweise einen unkonturierten Bereich 8 am Gittereintritt und einen unkonturierten Bereich 9 am Gitteraustritt aufweisen kann. Weiterhin sind in der Fig. 1 die Eintrittskante 6 am Schaufelfuß und die Austrittskante 7 am Schaufelfuß zu erkennen.

Fig. 2 zeigt eine Darstellung der Konturierung der Seitenwand 1 für ein erstes Ausführungsbeispiel der Beschaufelung in einem Höhenliniendiagramm, bei dem die Schaufeln 20 keine Fußausrundungsfläche aufweisen und bei dem die Isolinien der Erstreckung der Seitenwandkontur in die zur Seitenwand orthogonalen Richtung dargestellt sind. Auf der Schaufeldruckseite 4 ist eine Vertiefung 11 und auf der Schaufelsaugseite 5 ist eine Aufdickung 10 angeordnet. Nach einem bevorzugten Ausführungsbeispiel kann diese Aufdickung 10 durch eine Erhebung ausgebildet sein. Nach einem anderen bevorzugten Ausführungsbeispiel kann diese Aufdickung 10 durch eine in Bezug zu der Vertiefung 11 geringer ausgeprägte Vertiefung ausgebildet sein. Vorzugsweise ist eine sich von der Schaufelsaugseite 5 zu der Schaufeldruckseite 4 erstreckende zweite Aufdickung 12 in der der Austrittsseite benachbarten Häfte angeordnet.

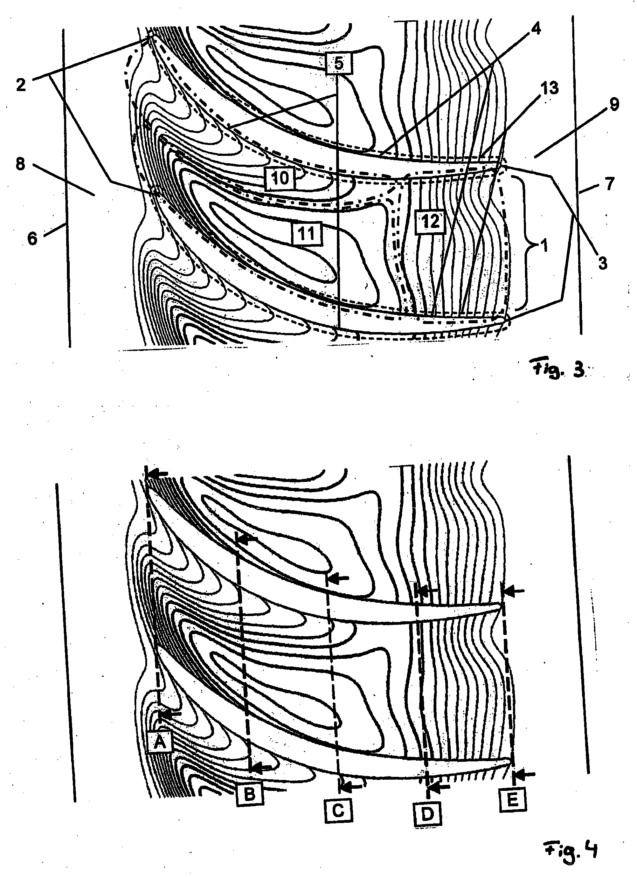

Fig. 3 zeigt eine Darstellung der Konturierung der Seitenwand 1 für ein zweites Ausführungsbeispiel der Beschaufelung in einem Höhenliniendiagramm, bei dem die Schaufeln 20 eine Fußausrundungsfläche 13 aufweisen, die in der Fig. 3 gestrichelt dargestellt ist, und bei dem die Isolinien der Erstreckung der Seitenwandkontur in die zur Seitenwand orthogonalen Richtung dargestellt sind. Wie in dem in der Fig. 2 gezeigten Ausführungsbeispiel sind auf der Schaufeldruckseite 4 die Vertiefung 11 und auf der Schaufelsaugseite 5 die Aufdickung 10 sowie die von der Schaufelsaugseite 5 zu der Schaufeldruckseite 4 erstreckende zweite Aufdickung 12 in der der Austrittsseite benachbarten Häfte angeordnet.

Zur Veranschaulichung der Konturierung bei verschiedenen Ausführungsbeispielen werden nachfolgend Schnittdarstellungen entlang der Schaufelkanallängen gezeigt, wobei in der Fig. 4 die Schnittpositionen in den entsprechenden Höhenliniendiagrammen gezeigt werden.

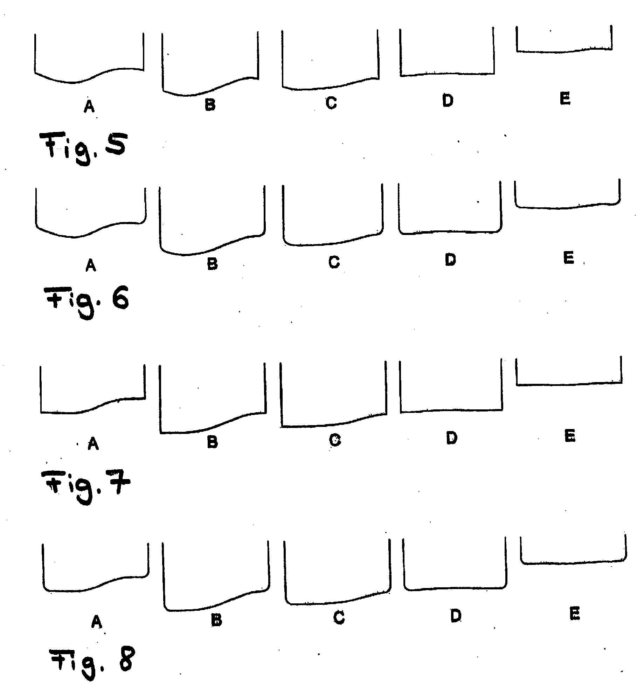

Fig. 5 zeigt eine Darstellung der Schaufelwände und der nabenseitigen Seitenwand 1 aus den Schnitten A, B, C, D und E in den in der Fig. 4 gezeigten Schnittpositionen für eine erste Ausgestaltung der Beschaufelung, die einen nicht-orthogonalen Übergang der Seitenwand 1 in die Schaufeln 20 und keine Fußausrundungsfläche aufweist. Fig. 6 zeigt eine Darstellung der Schaufelwände und der nabenseitigen Seitenwand 1 aus den Schnitten A, B, C, D und E in den in der Fig. 4 gezeigten Schnittpositionen für eine zweite Ausgestaltung der Beschaufelung, die einen nicht-orthogonalen Übergang der Seitenwand 1 in die Schaufeln 20 und die Fußausrundungsfläche 13 aufweist. Fig. 7 zeigt eine Darstellung der Schaufelwände und der nabenseitigen Seitenwand 1 aus den Schnitten A, B, C, D und E in den in der Fig. 4 gezeigten Schnittpositionen für eine dritte Ausgestaltung der Beschaufelung, die einen orthogonalen Übergang der Seitenwand 1 in die Schaufeln 20 und keine Fußausrundungsfläche aufweist. Fig. 8 zeigt eine Darstellung der Schaufelwände und der nabenseitigen Seitenwand 1 aus den Schnitten A, B, C, D und E in den in der Fig. 4 gezeigten Schnittpositionen für eine vierte Ausgestaltung der Beschaufelung, die einen orthogonalen Übergang der Seitenwand 1 in die Schaufeln 20 und die Fußausrundungsfläche 13 aufweist. Die Erfindung kann auch bei Kombinationen eines orthogonalen und eines nicht-orthogonalen Übergangs angewandt werden, bei denen an der Schaufeldruckseite 4 oder an der Schaufelsaugseite 5 ein orthogonaler Übergang erfolgt, während an der anderen der beiden, den Strömungskanal begrenzenden Schaufelwände ein nicht-orthogonaler Übergang von der Seitenwand 1 zu der Schaufel 20 erfolgt.

### Bezugszeichenliste

- 1: Seitenwand
- 2: Schaufelvorderkante
- 3: Schaufelhinterkante
- 4: Schaufeldruckseite
- 5: Schaufelsaugseite
- 6: Eintrittskante Schaufelfuß
- 7: Austrittskante Schaufelfuß
- 8: unkonturierter Bereich der Seitenwand am Gittereintritt
- 9: unkonturierter Bereich der Seitenwand am Gitteraustritt
- 10: Aufdickung entlang der Saugseite
- 11: Vertiefung entlang der Druckseite
- 12: zweite Aufdickung
- 13: Fußausrundungsflache
- 20: Schaufel

- A: Schnitt bei 1 % Schaufelkanallänge
- B: Schnitt bei 25 % Schaufelkanallänge
- C: Schnitt bei 50 % Schaufelkanallänge
- D: Schnitt bei 75 % Schaufelkanallänge
- E: Schnitt bei 99 % Schaufelkanallänge

## Patentansprüche

1. Beschaufelung für eine Turbomaschine, wobei auf einer eine Anzahl an Schaufeln (20) aufweisenden Seitenwand (1) Aufdickungen (10) und Vertiefungen (11) ausgebildet sind, wobei für die Anzahl an Schaufeln (20) jeweils mindestens eine Vertiefung (11) auf einer Schaufeldruckseite (4) und mindestens eine Aufdickung (10) auf einer Schaufelsaugseite (5) angeordnet sind, und die an der Schaufelsaugseite (5) angeordnete Aufdickung (10) und/oder die an der Schaufeldruckseite (4) angeordnete Vertiefung (11) in der der Eintrittsseite zugewandten Hälfte des Schaufelgitters angeordnet ist, **dadurch gekennzeichnet, dass** die Beschaufelung eine sich von der Schaufelsaugseite (5) zu der Schaufeldruckseite (4) erstreckende zweite als Erhöhung ausgestaltete Aufdickung (12) in der der Austrittsseite benachbarten Hälfte aufweist und die Seitenwand axial nach der zweiten Aufdickung unkonturiert ist.

2. Beschaufelung nach Anspruch 1, **dadurch gekennzeichnet, dass** die Seitenwand axial vor und/oder nach den Aufdickungen und/oder Vertiefungen unkonturiert ist.

3. Beschaufelung nach einem der vorhergehenden Ansprüche, **dadurch gekennzeichnet, dass** sich die Vertiefung und/oder Aufdickung in axialer Richtung über wenigstens 10%, vorzugsweise wenigstens 30% der axialen Gitterlänge erstreckt.

4. Beschaufelung nach Anspruch 1, **dadurch gekennzeichnet, dass** die zweite Aufdickung (12) umfangssymmetrisch oder umfangsasymmetrisch ist.

5. Beschaufelung nach einem der vorhergehenden Ansprüche, **dadurch gekennzeichnet, dass** im Bereich des Übergangs von der Schaufel (20) zu der Seitenwand (1) die Schaufel (20) eine Fußausrundungsfläche (13) aufweist.

6. Beschaufelung nach einem der vorhergehenden Ansprüche, **dadurch gekennzeichnet, dass** im Bereich des Übergangs von der Schaufel (20) zu der Seitenwand (1) die Schaufel (20) einen geknickten, insbesondere orthogonalen Übergang aufweist

7. Herstellungsverfahren für eine Beschaufelung einer Turbomaschine mit mindestens einem Umformen und/oder mindestens einem spanenden Bearbeiten derart, dass bei einer eine Anzahl an Schaufeln (20) aufweisenden Seitenwand (1) Aufdickungen (10) und Vertiefungen (11) ausgebildet werden, wobei für die Anzahl an Schaufeln (20) jeweils mindestens eine Vertiefung (11) auf einer Schaufeldruckseite (4) und mindestens eine Aufdickung (10) auf einer Schaufelsaugseite (5) ausgebildet werden, und die an der Schaufelsaugseite (5) angeordnete Aufdickung (10) und/oder die an der Schaufeldruckseite (4) angeordnete Vertiefung (11) in der der Eintrittsseite zugewandten Hälfte des Schaufelgitters angeordnet ist, dadurch gekennezeichnet, dass sich eine zweite Aufdickung (12) von der Schaufelsaugseite (5) zu der Schaufeldruckseite (4) in der der Austrittsseite benachbarten Hälfte erstreckt und die Seitenwand axial nach der zweiten Aufdickung unkonturiert ist.

## Claims

1. Blades for a turbo engine, wherein thickened sections (10) and indentations (11) are formed on a sidewall (1) having a number of blades (20), wherein respectively at least one indentation (11) on a blade pressure side (4) and at least one thickened section (10) on a blade suction side (5) are arranged for the number of blades (20), and the thickened section (10) arranged on the blade suction side (5) and/or the indentation (11) arranged on the blade pressure side (4) is arranged in the half of the blade row facing the inlet side, **characterised in that** the blades have a second thickened section (12) formed as elevation in the half adjacent to the outlet side and extending from the blade suction side (5) to the blade pressure side (4), and the sidewall axially after the second thickened section is uncontoured.

2. The blades as claimed in claim 1, **characterised in that** the sidewall is uncontoured axially before and/or after the thickened sections and/or indentations.

3. The blades as claimed in one of the preceding claims, **characterised in that** the indentation and/or thickened section extends over at least 10%, preferably at least 30% of the axial row length in the axial direction.

4. The blades as claimed in claim 1, **characterised in that** the second thickened section (12) is circumferentially symmetrical or circumferentially asymmetrical.

5. The blades as claimed in one of the preceding claims, **characterised in that** the blade (20) has a foot fillet area (13) in the area of the transition from the blade (20) to the sidewall (1).

6. The blades as claimed in one of the preceding claims, **characterised in that** the blade (20) has a kinked, in particular orthogonal transition in the area of the transition from the blade (20) to the sidewall (1).

7. A production method for blades of a turbo engine comprising at least one forming and/or at least one machining process in such a way that thickened sections (10) and indentations (11) are formed on a sidewall (1) having a number of blades (20), wherein respectively at least one indentation (11) on a blade pressure side (4) and at least one thickened section (10) on a blade suction side (5) are formed for the number of blades (20), and the thickened section (10) arranged on the blade suction side (5) and/or the indentation (11) arranged on the blade pressure side (4) is arranged in the half of the blade row facing the inlet side, **characterised in that** a second thickened section (12) extends from the blade suction side (5) to the blade pressure side (4) in the half adjacent to the outlet side, and the sidewall is uncontoured axially after the second thickened section.

## Revendications

1. Aubage pour une turbomachine, dans lequel des épaississements (10) et des renfoncements (11) sont formés sur une paroi latérale (1) présentant une pluralité d'aubes (20), dans lequel, pour la pluralité d'aubes (20), au moins un renfoncement (11) est respectivement disposé sur un côté pression (4) de l'aube et au moins un épaississement (10) est respectivement disposé sur un côté aspiration (5) de l'aube, et l'épaississement (10) disposé sur le côté aspiration (5) de l'aube et/ou le renfoncement (11) disposé sur le côté pression (4) de l'aube sont disposés dans la moitié de la grille d'aubes tournée vers le côté entrée, **caractérisé en ce que** l'aubage comporte un deuxième épaississement (12) dans la moitié adjacente au côté sortie, lequel est conçu comme une surélévation s'étendant du côté aspiration (5) de l'aube jusqu'au côté pression (4) de l'aube, et **en ce que** la paroi latérale n'est pas profilée axialement après le deuxième épaississement.

2. Aubage selon la revendication 1, **caractérisé en ce que** la paroi latérale n'est pas profilée axialement avant et/ou après les épaississements et/ou les renfoncements.

3. Aubage selon l'une des revendications précédentes, **caractérisé en ce que** le renfoncement et/ou l'épaississement s'étendent sur au moins 10%, de préférence sur au moins 30% de la longueur axiale de la grille, dans la direction axiale.

4. Aubage selon la revendication 1, **caractérisé en ce que** le deuxième épaississement (12) est circonférantiellement symétrique ou circonférentiellement asymétrique.

5. Aubage selon l'une des revendications précédentes, **caractérisé en ce que** dans la région de transition entre l'aube (20) et la paroi latérale (1), l'aube (20) présente une surface d'arrondissement de pied (13).

6. Aubage selon l'une des revendications précédentes, **caractérisé en ce que** dans la région de transition entre l'aube (20) et la paroi latérale (1), l'aube (20) présente une transition coudée, en particulier orthogonale.

7. Procédé de réalisation d'un aubage d'une turbomachine, comprenant au moins une déformation et/ou au moins un usinage par enlèvement de copeaux, de manière à former des épaississements (10) et des renfoncements (11) sur une paroi latérale (1) comportant une pluralité d'aubes (20), sachant que pour la pluralité d'aubes (20), au moins un renfoncement (11) est respectivement disposé sur un côté pression (4) de l'aube et au moins un épaississement (10) est respectivement disposé sur un côté aspiration (5) de l'aube, et l'épaississement (10) disposé sur le côté aspiration (5) de l'aube et/ou le renfoncement (11) disposé sur le côté pression (4) de l'aube sont disposés dans la moitié de la grille d'aubes tournée vers le côté entrée, **caractérisé en ce qu'**un deuxième épaississement (12) s'étend du côté aspiration (5) de l'aube jusqu'au côté pression (4) de l'aube dans la moitié adjacente au côté sortie, et **en ce que** la paroi latérale n'est pas profilée axialement après le deuxième épaississement.
